# EUROPÄISCHE PATENTSCHRIFT

(11) **EP 1 382 916 B1**
(45) Veröffentlichungstag und Bekanntmachung des Hinweises auf die Patenterteilung: **23.08.2006**
(21) Anmeldenummer: 03016203.6
(22) Anmeldetag: 17.07.2003
(51) Int. Cl.: F24D 3/16, F24F 5/00

(54) **Wärmeübertrager mit spiralförmig angeordneten Kunststoff-Kapillarrohrmatten und Verfahren zu seiner Anwendung**
Heat exchanger with spirally wound mats of plastic capillary tubes and method for using it
Echangeur de chaleur avec tapis de tubes capillaires en plastic enroulés en spirale et méthode d'utilisation

(30) Priorität: 18.07.2002 DE 10232606; 25.03.2003 DE 10313384
(43) Veröffentlichungstag der Anmeldung: 21.01.2004
(73) Patentinhaber: Clina Heiz- und Kühlelemente GmbH, 13435 Berlin (Wittenau) (DE)
(72) Erfinder: Chahed, Bechir, 10997 Berlin (DE)
(74) Vertreter: Auerbach, Bettina

(56) Entgegenhaltungen:
- DE-A1- 19 751 883
- DE-A1- 19 806 207
- DE-A1- 19 831 836
- DE-A1- 19 831 918

## Beschreibung

Die Erfindung betrifft einen Wärmeübertrager mit spiralförmig angeordneten Kunststoff-Kapmarrohrmatten, die aus das Wärmeträgermedium als Primärstoffstrom führenden Kunststoff-Kapillarrohren bestehen. Weiterhin betrifff die Erfindung ein Verfahren zum Betreiben eines Spiralwärmeübertragers aus Kunststoff-Kapillarrohrmatten, bei dem durch eine spiralförmig gewickelte Kunststoff-Kapillarrohrmatte, die von einem dem Wärmetransport dienendem Primärstoffstrom durchströmt wird, ein zu erwärmender oder zu kühlender Sekundärstoffstrom geführt wird.
Eine derartige technische Lösung wird insbesondere in der Raum- oder Gebäudeklimätisierung bzw. bei der Gewinnung von Gebrauchskälte und/oder Gebrauchswärme benötigt.

In der Wärmeübertragertechnik ist die Verwendung von spiralförmig angeordneten Kunststoff-Kapillarrohrmatten bereits bekannt. So beschreibt die DE 197 51 883 C2 eine Kunststoff-Kapillarrohrmatte zur Kühlung oder Heizung von Räumen und/oder Wasserbädem. Hierbei wird neben einer vergleichsweise einfachen Herstellung des Wärmeübertragers die kompakte Anordnung verhältnismäßig großer Wärmeübergangsflächen ermöglicht.
Zur Sicherung einer definierten Durchströmung und eines berechenbaren Strömungswiderstandes in möglichst allen Bereichen des Wärmeübertrages sieht die beschriebene technische Lösung vor, die einzelnen Wicklungen der Kunststoff-Kapillarrohrmatten durch vorzugsweise profilierte Folien voneinander zu trennen. Damit soll eine axiale Durchströmung des durch die spiralförmig angeordneten Kunststoff-Kapillarrohrmatten und ein möglichst definierter Abstand der einzelnen Lagen der Kunststoff-Kapülarrohnnatten gewährleistet werden.
Mit der DE 198 31 918 C2 wird weiterhin eine technische Lösung bekannt gemacht, die bereits den Einsatz von gewickelten oder flach angeordneten Kunststoff-Kapillarrohrmatten vorsieht.

In vorzugsweise senkrechter Anordnung soll der Transport des Sekundärstoffstromes vorzugsweise parallel zur durch die flach angeordneten oder zur Achse gewickelter Kunststoff-Kapmarrohrmatten und unter Zuhilfenahme der Konvektionsströmung, die durch den thermodynamischen Dichteunterschied unterstützt wird, ermöglicht werden.

Die Nachteile dieser Lösungen bestehen insbesondere darin, daß bei spiralförmig angeordneten Kunststorf-Kapillarrohrmatten bei einem achsparallel geführten Sekundärstoffstrom wegen der eingesetzten Folie die freie Umspülung der Kapillarrohre eingeschränkt ist. Bei Anordnung von einer Kapillarrohrmatte mit eingängigem Primärstrom entsteht wegen des axial geführten Sekundärstoffstrom eine Kreuz-Gegenstrom-Führung mit geringem Gegenstromanteil. Werden mehrere Durchgänge gewählt, steigt der Druckverlust in der Kapillarrohrmatte stark an, die Temperatur des außen geführten Sekundärstoffstroms ist über den Querschnitt des Wärmeübertragers nicht gleich, was besonders am Austritt nachteilig sein kann.

Die Aufgabe der Erfindung besteht deshalb im Schaffen einer technischen Lösung, mit deren Hilfe die Mängel des bekannten Standes der Technik überwunden werden. Insbesondere besteht die Aufgabe, unter Einsatz von korrosions- und inkrustationsfreiem Werkstoff für die Wärmeübertragerfläche einen guten konvektiven Wärmeübergang unter Verzicht auf allgemein übliche Rippenanordnung zu erreichen. Weiterhin soll eine thermodynamisch günstige Führung der Sekundärstoffstroms realisiert werden. Insbesondere wird angestrebt, an jeder Stelle des Wärmeübertragerpaketes gleiche Austrittstemperaturen und eine niedrige Austrittsgeschwindigkeit des Sekundärstoffstromes zu erreichen, damit der Wärmeübertrager beispielsweise auch zur sogenannten stillen Heizung oder Luftkühlung in Aufenthaltsräumen eingesetzt werden kann. Die zu schaffende technische Lösung soll es weiterhin ermöglichen, sehr genau thermodynamische Vorausberechnungen und reproduzierbare meßtechnische Leistungsnachweise zu erstellen. Schließlich wird eine sehr gute Anpassungsfähigkeit an unterschiedliche Einsatzbedingungen bei Sicherung vorteilhafter Wartungsmöglichkeiten angestrebt.

Die Aufgabe wird erfindungsgemäß durch die Merkmale der Ansprüche 1 und 22 gelöst. Danach besteht ein Wärmeübertrager mit spiralförmig angeordneter Kunststoff-Kapmarrohrmatte aus Kunststoff-Kapillarrohrmatten, die das Wärmeträgermedium als Primärstoffstrom führen. Dabei bilden die spiralförmig angeordneten Kunststoff-Kapillarrohrmatten wenigstens einen formstabilen Wickelkörper. Im inneren des Wickelkörpers ist ein der Zu- oder Abfuhrung des Sekundärstoffstroms dienender Innenraum des Wärnieüberträgers ausgebildet. Zusätzlich ist der Wickelkörper mit einer die Formstabilität und den radialen Durchtritt des Sekundärstoffstroms befördernden Hilfskonstruktion ausgestattet. Im einfachsten Fall werden diese Hilfskonstruktionen durch profilierte radial angeordnete Abdeckungen des Wickelkörpers gebildet, die den Wickelkörper jeweils begrenzen, so daß eine annähernd senkrecht zur Achse des Wickelkörpers gerichtete Strömung des Sekundärstoffstroms durch den Wickelkörper bewirkt wird.

Eine weitere grundsätzliche Möglichkeit der Gestaltung des Wärmeübertragers besteht aus das Wärmeträgermedium als Primärstoffstrom führenden Kunststoff-Kapillarrohrmatten, einem inneren den Sekundärstoffstrom zu- oder abführenden Rohr sowie einem äußeren den Sekundärstoffstrom zu- oder abführenden Gehäuse, innerhalb dessen die spiralförmig gewickelte Kapillarrohrmatte angeordnet ist. Die rohrförmigen Module des Wärmeübertragers sind mit oder ohne spiralförmig angeordneten Kunststoff-Kapillarrohrmatten ansgestattet und axial miteinander kombinierbar verbünden. Das innere Rohr weist wenigstens im Bereich der spiralförmig angeordneten Kunststoff-Kapmärrohrmatte Perforationen auf. Dagegen weist das äußere Gehäuse des Wärmeübertragers bedarfsweise Perforationen auf, unabhängig davon, ob in dem jeweiligen Modul Kunststoff-Kapmarrohimatten angeordnet sind oder nicht. Zwischen den Modulen sind außerdem wenigstens außerhalb des inneren Rohres radiale Abdeckungen angeordnet, die dem radialen Durchtritt des Sekundärstoffstroms durch die spiralförmig angeordnete Kunststoff-Kapillarrohrmatte dient.

Die weiteren vorteilhaften Ausgestaltungen des Wärmeübertragers sind in den Unteransprüchen 4 bis 21 beschrieben.

Außerdem wird bei einem Verfahren zum Anwenden eines Spiralwärmeübertragers aus Kunststoff-Kapillarrohrmatten ein dem Wärmetransport dienender Primärstoffstrom durch eine spiralförmig gewickelte Kunststoff-Kapillarrohrmatte geführt.

Durch die spiralförmig gewickelte Kunststoff-Kapillarrohrmatte wird dabei ein zu erwärmender oder zu kühlender Sekundärstoffstrom geführt.
Die Strömung des Sekundärstoffstroms erfolgt dabei annähernd senkrecht zur Achse der spiralförmig gewickelten Kunststoff-Kapillarrohrmatte durch das dadurch gebildete Paket von Wärmeübertragerflächen. Auf diese Weise wird sichergestellt, daß der Sekundärstoffstrom in definierter Weise beim Kontakt mit den ersten Wärmeübertragerflächen im gesamten Wärmeübertrager auf einen Primärstoffstrom einheitlicher Temperatur trifft. Ebenso verhält es sich beim Austritt des Sekundärstoffstroms aus der spiralförmig gewickelten Kunststoff-Kapillarrohrmatte. Hierdurch kann die Wärmeübertragung in definierter Weise im sogenannten Gegenstrom oder Gleichstrom erfolgen. Strömungsbehindernde zusätzliche Einbauten behindern nicht die nahezu vollständige Umströmung der Kapillarrohre durch den Sekundärstoffstrom, was den Wärmeübergang begünstigt.
In einer bevorzugten Ausführungsvariante ist es vorgesehen, daß im Falle der annähernd senkrechten Anordnung die Achse des Spiralwärmeübertragers der Transport des Sekundärstoffstroms durch den Spiralwärmeübertrager durch den sich ergebenden thermodynamischen Dichteunterschied bewirkt wird. Damit ist es beispielsweise möglich, die Wärmeübertragerflächen in Raumgestaltungselementen mit vorzugsweise senkrechter Erstreckung oder in raumbegrenzenden Wänden anzuordnen und unter Verzicht auf technische Hilfsmittel, wie Gebläse oder Pumpen, das sogenannte stille Kühlen oder Heizen zu bewirken.
Eine weitere Ausführungsvariante sieht vor, den Spiralwärmeübertrager als Trockenkühler zur Kühlung eines flüssigen Primärstromes zu nutzen, indem kalte atmosphärische Luft als Sekundärstoffstrom eingesetzt wird.
Dagegen läßt sich in einer anderen Variante der Spiralwärmeübertrager als Naßkühler nutzen, indem zum Zwecke der Leistungssteigerung unter Nutzung der Verdunstungskälte der Wickelkörper aus der Kunststoff-Kapillarrohrmatte mit einer verdunstenden Flüssigkeit, vorzugsweise mit Wasser, berieselt oder besprüht wird.

Es ist auch möglich, den Spiralwärmeübertrager durch eine wahlweise temperatur- und/oder leistungsgesteuerte Umschaltung zwischen den Betriebsarten Trockenkühlung und Naßkühlung zu nutzen.
Weiterhin ist vorgesehen, mehrstufig arbeitende Spiralwärmeübertragerkombinationen so einzusetzen, daß wenigstens zwei Spiralwärmeübertrager hintereinander geschaltet werden.

Mit Hilfe einer zwischen den hintereinander geschalteten Wärmeübertragern angeordneten Transporteinrichtung, vorzugsweise einer Pumpe oder eines Gebläses, wird im ersten Spiralwärmeübertrager der Sekundärstoffstrom von außen nach innen und im zweiten Spiralwärmeübertrager von innen nach außen geführt. Bei einer derartigen Anwendung ist es möglich, die einzelnen Spiralwärmeübertrager der Spiralwärmeübertragerkombination in verschiedenen Räumen anzuordnen.

In einer weiteren bevorzugten Anwendung wird der Spiralwärmeübertrager zum Zwecke der Kühlung eines sogenannten Kühlsegels über diesem Kühlsegel in horizontaler oder nahezu horizontaler Achslage angeordnet. Die abzukühlende Luft wird Mittels Gebläse durch den Spiralwärmeübertrager gefördert, wobei das Gebläse vor, innerhalb oder nach den spiralförmig angeordneten Kunststoff-Kapillarrohrmatten eingesetzt werden kann. Dabei wird die vom Spiralwärmeübertrager gekühlte Luft dem darunter angeordneten ebenen, schalen- oder trogförmigen Kühlsegel zugeführt. Bei Ausbildung des Kühlsegels als eine perforierte Konstruktion wird das Kühlsegel von der darüber erzeugten kalten Luft durchströmt.

Als Sekundärstoffstrom, der den Spiralwärmeübertrager durchströmt, kann außer gasförmigen Medien, vorzugsweise Luft, eine Flüssigkeit, vorzugsweise aufzuheizendes oder zu kühlendes Wasser eingesetzt werden.

Es ist auch möglich, für das aufzuheizende oder zu kühlende Medium wenigstens Teile einer Umweltwärmequelle oder Umweltkältequelle zu verwenden. In diesem Falle wird bevorzugt der Primärstoffstrom für energetische Zwecke erwärmt oder abgekühlt, wobei die Umweltwärmequelle oder Umweltkältequelle den Sekundärstoffstrom bildet, beispielsweise in Form von Umgebungsluft, Flußoder Meerwasser.

Grundsätzlich ist es möglich, den Spiralwärmeübertrager oder die Spiralwärmeübertragerkombination in räumlich beliebiger Achslage, vorzugsweise jedoch in vertikaler oder in horizontaler Achslage, einzusetzen.

Die Vorteile der Erfindung bestehen zusammengefaßt darin, daß unter Einsatz von korrosions- und krustationsfreiem Werkstoff für die Wärmeübertragerflächen in Form von Kunststoff-Kapillarrohrmatten nun ein kompakter und gut berechenbarer Wärmeübertrager für unterschiedlichste Aufgaben zur Verfügung steht. Trotz Verwendung von Kunststoff-Kapillarrohrmatten als Wärmeübertragerflächen lassen sich mit Hilfe der geschaffenen Lösung Wärmeübertrager gestalten, die bei minimierten Strömungswiderständen Wärmeübertragungen zwischen Primärstoffstrom und Sekundärstoffstrom wahlweise nach dem Gegenstrom- oder nach dem Gleichstromprinzip ermöglichen. Das paketweise Anordnen der Wärmeübertragerflächen in Form von spiralförmig gewickelten Kunststoff-Kapillarrohrmatten erlaubt das Bereitstellen einer großen Wärmeübertragerfläche auf engstem Raum. Wegen der thermodynamisch günstigen Führung des Sekundärstoffstroms bestehen deutlich verbesserte Voraussetzungen für das sogenannte stille Erwärmen oder Kühlen unter Nutzung der Konvektionsströmung infolge thermodynamischer Dichteunterschiede.

Die Erfindung soll nachstehend mit Ausführungsbeispielen näher erläutert werden.

In der beigefügten Zeichnung zeigen:
- Fig. 1: eine schematische Vertikalschnittdarstellung eines Wärmeübertragers für die Raumbeheizung mit den Primärstoffstrom führenden Kunststoff-Kapillarrohrmatten, die einen der Zu- oder Abführung des Sekundärstoffstroms dienenden Innenraum bilden;
- Fig. 2: eine schematische Vertikalschnittdarstellung eines Wärmeübertragers für die Raumkühlung mit den Primärstoffstrom führenden Kunststoff-Kapillarrohrmatten, die einen der Zu- oder Abführung des Sekundärstoffstroms dienenden Innenraum bilden;
- Fig. 3: eine schematische Vertikalschnittdarstellung eines einmoduligen Wärmeübertragers für die Raumheizung mit einem perforierten äußeren Gehäuse und einem den erwärmten Sekundärstoffstrom abführenden Innenrohr;
- Fig. 4: eine schematische Vertikalschnittdarstellung eines mehrmoduligen Wärmeübertragers für die Raumheizung, bestehend aus zwei perforierten äußeren Gehäuseteilen, einem unperforierten äußeren Gehäuseteil und zwei gegensätzlich vom Sekundärstoffstrom durchströmten Wickelkörpern;
- Fig. 5: eine schematische Vertikalschnittdarstellung eines mehrmoduligen Wärmeübertragers für die Raumkühlung, bestehend aus zwei perforierten äußeren Gehäuseteilen, einem unperforierten äußeren Gehäuseteil und zwei gegensätzlich vom Sekundärstoffstrom durchströmten Wickelkörpern;
- Fig. 6: eine schematische Schnittdarstellung eines Wärmeübertragers in nahezu horizontaler Achslage mit Ausbildung des unteren Bereichs des äußeren Gehäuses als Kondensatauffangvorrichtung;
- Fig. 7: eine schematische Schnittdarstellung der Anordnung eines Wärmeübertragers über einem Kühlsegels an einer Raumdecke;
- Fig. 8: eine schematische Vertikalschnittdarstellung eines einmoduligen Wärmeübertragers, der mit einer Stoffstromleiteinrichtung, einem Sekundärstoffstrom-Filter und einem Reinigungsverschluß ausgestattet ist;
- Fig. 9: eine schematische Schnittdarstellung eines in einem Wanddurchlaß angeordneten Wärmeübertargers und
- Fig. 10: eine schematische Schnittdarstellung eines mehrmoduligen Wärmeübertragers, der mit einer Mischkammer für den Einsatz verschiedener Sekundärstoffströme ausgestattet ist.

### Ausführungsbeispiele

### Ausführungsbeispiel 1:

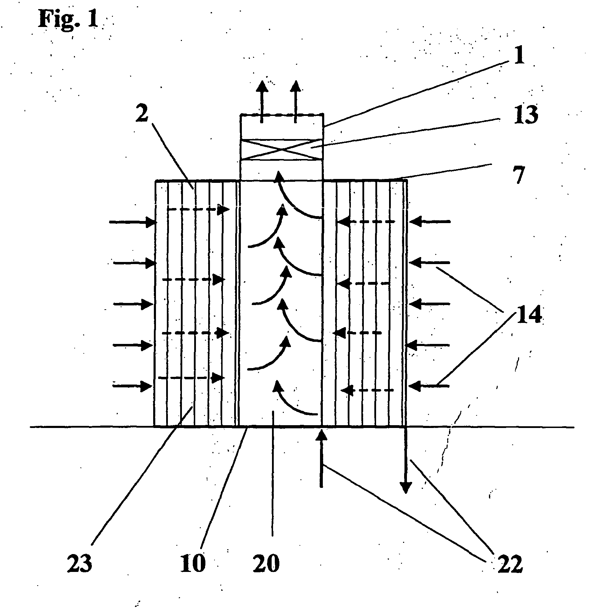

Gemäß der Figur 1 ist ein Wärmeübertrager für die Raumheizung mit einem spiralförmig angeordneten Kunststoff-Kapillarrohrmatten-Paket 2 so ausgestattet, daß im Inneren des Wickelkörpers 23 ein zylindrischer Innenraum 20 besteht. Dieser Wickelkörper 23 ist durch Profilierungen zwischen einer Deckfläche 10 und einer Abdeckungen 7 positioniert. In die Abdeckung 7 ist zusätzlich ein Gebläse 13 zur Unterstützung der Sekundärstofiströmung 14 angeordnet. Die spiralförmig angeordnete Kunststoff-Kapillarrohrmatte 2 wird mit einem Wärmeträgermedium als Primärstoffstrom 22 beaufschlagt. Die zu erwärmende Raumluft strömt als Sekundärstoffstrom 14 radial durch den Wickelkörper 23 bis zum Innenraum 20 und verläßt nach dem Passieren des Gebläses 13 als erwärmter Sekundärstoffstrom 14 den Wärmeübertrager. Infolge der Konvektion im Innenraum 20 des Wärmeübertragers kann der Wärmeübertrager bei Stillstand des Gebläses 13 auch für die sogenannte stille Heizung genutzt werden.

### Ausführungsbeispiel 2:

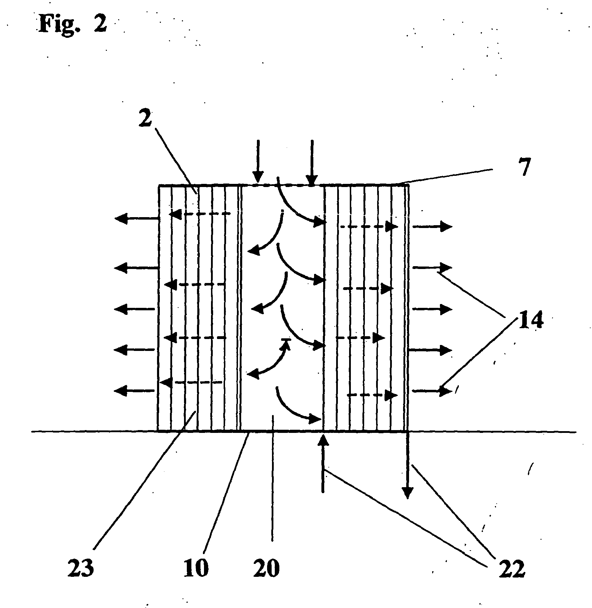

Gemäß der Figur 2 wird ein Wärmeübertrager in Form einer spiralförmig angeordneten Kunstetoff-Kapillarrohrmatte 2 zur Raumkühlung genutzt. Der Wärmeübertrager ist dabei wie im Beispiel 1 ausgeführt, befindet sich jedoch insgesamt in einem äußeren Gehäuse 5, das an seinem unteren Ende Perforationen 6 aufweist. Die Abdeckung 7 ist im Bereich des rohrförmigen Innenraums 20 des Wärmeübertragers perforiert ausgebildet. Durch diese Perforation 8 gelangt die warme Raumluft in den Wärmeübertragen, wo sie infolge der Beaufschlagung des aus einer Kunststoff-Kapillarrohrmatte 2 gebildeten Wickelkörpers 23 mit einem Kälteträgermittel als Primärstoffstrom 22 abgekühlt wird. Die Raumluft durchströmt den Wickelkörper 23 als Sekundärstoffstrom 14 annähernd radial und wird außerhalb des Wickelkörpers 23 im äußeren Gehäuse 5 erfaßt. Infolge der erhöhten Dichte der abgekühlten Raumluft strömt diese aus den in Bodennähe angeordneten Perforationen 6 des äußeren Gehäuses 5 aus und erzeugt dabei im Innenraum 20 des Wärmeübertragers einen Unterdruck, der das Einströmen der warmen Raumluft in den Wärmeübertrager und das Durchströmen des Wickelkörpers 23 bewirkt. Ein derartiger Wärmeübertrager wird für die sogenannte stille Raumkühlung genutzt.

### Ausführungsbeispiel 3:

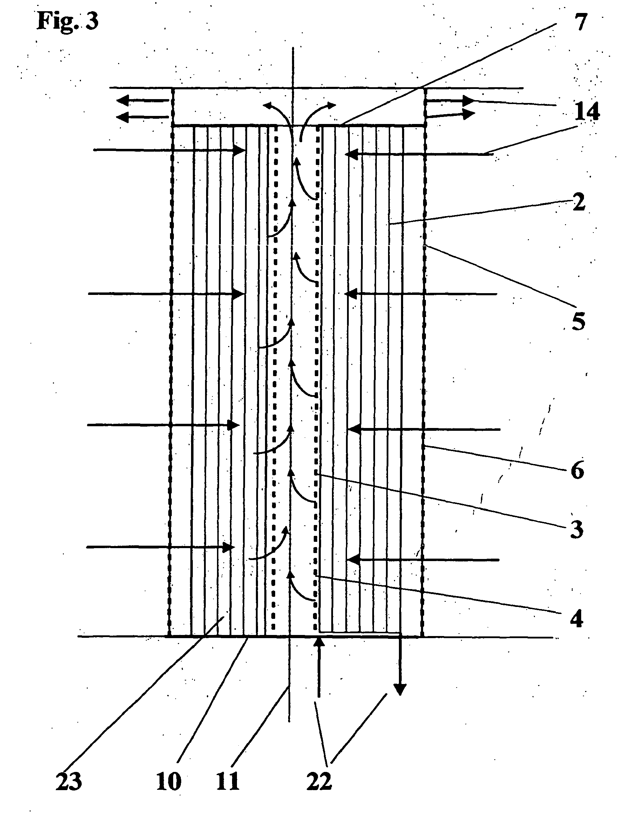

Gemäß Fig. 3 wird ein raumhoher Wärmeübertrager für die Raumheizung aus zwei rohrförmigen Modulen 1 gebildet. Das untere Modul 1 besteht aus einem äußeren Gehäuse 5, das Perforationen 6 aufweist. Dieses rohrförmige Modul 1 besitzt ein inneres Rohr 3, das über die gesamte Höhe Perforationen 4 aufweist. Um das innere Rohr 3 ist spiralförmig eine Kunststoff-Kapillarrohnnatte 2 gewickelt, die mit einem Wärmeträgermedium als Primärstoffstrom 22 beaufschlagt wind. Das untere Modul 1 ist mit einer Abdeckung 7 ausgestattet, die in radialer Richtung den Wickelkörper 23 zwischen dem Innenrohr 3 und dem äußeren Gehäuse 5 begrenzt. Oberhalb des unteren Moduls 1 ist ein weiteres rohrförmiges Modul 1 in Form eines äußeren Gehäuses 5 ohne weitere Ausrüstungskomponenten angeordnet. Im Deckenbereich besitzt dieses Gehäuse 5 Perforationen 6, die zum Ausströmen der erwärmten Raumluft als dem den Wickelkörper 23 radial durchströmenden Sekundärstoffstrom 14 dient. Der Wärmeübertrager wird ausschließlich durch die in Inneren 20 entstehende Konvektionsströmung bestrieben und wird zur sogenannten stillen Heizung genutzt.

### Ausführungsbeispiel 4:

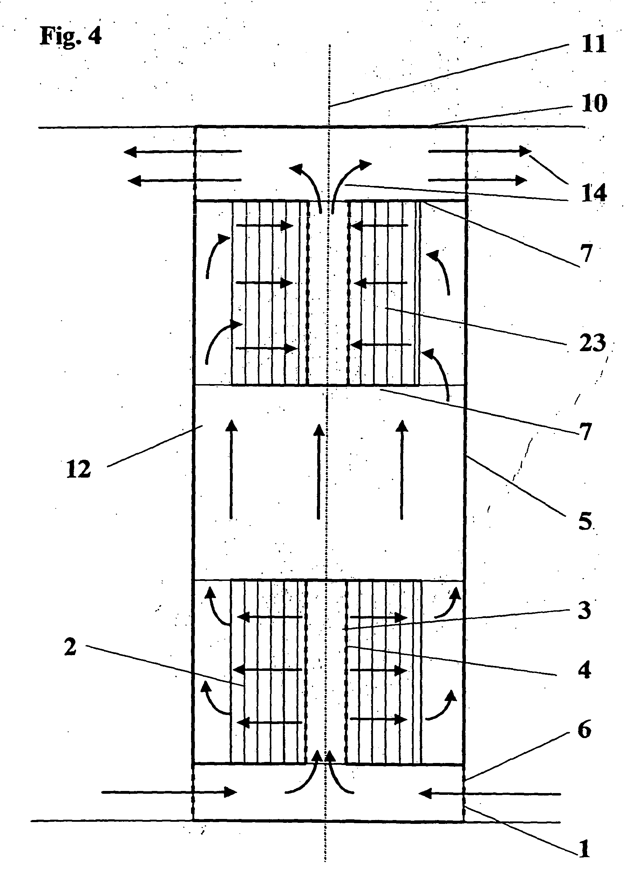

Gemäß der Figur 4 ist ein raumhoher Wärmeübertrager aus fünf rohrförmigen Modulen 1 zusammengesetzt. Im unteren und oberen Bereich sind baugleiche rohrförmige Module 1 in Form von äußeren Gehäusen 5 positioniert, die sowohl im Boden als auch im Deckenbereich Perforationen 6 aufweisen. Außerdem sind jeweils anschließend an diese rohrförmigen Module jeweils baugleiche Wärmeübertrager angeordnet, die jeweils aus einem Innenrohr 3 mit Perforationen 4, einem Wickelkörper 23, einem äußeren Gehäuse 5 ohne Perforationen 6, einer Abdeckung 7 , die jeweils den Wickelkörper 23 und den Querschnitt des inneren Rohres 3 verschließt sowie einer Deckfläche 10, die den Wickelkörper 23 und den zwischen dem Wickelkörper 23 und dem äußeren Gehäuse 5 bestehenden Raum mit einer kreisringförmigen Querschnittsfläche verschließt. Zwischen diesen beiden rohrförmigen Modulen 1 ist ein sogenanntes Leermodul 12 angeordnet, das lediglich aus einem äußeren Gehäuse 5 ohne Perforationen 6 besteht.

In dieser Anordnung fungiert der Wärmeübertragen in folgender Weise: Durch die Perforationen 6 im Bodenbereich strömt die Raumluft in den Wärmeübertrager und gelangt über die Abdeckung 7 in das Innenrohr 3 des unteren mit einem Wickelkörper 23 ausgestatteten Moduls 1. Die Raumluft strömt als Sekundärstoffstrom 14 radial durch den Wickelkörper 23 nach außen und gelangt über den Raum zwischen dem Wickelkörper 23 und dem äußeren Gehäuse 5 in das Leermodul 12. Aus diesem Leermodul 12 gelangt der Sekundärstoffstrom in eine zweite Wärmeübertragerstufe, die oberhalb des Leermoduls 12 angeordnet ist. Die Abdeckung 7 bewirkt das Eintreten des Sekundärstoffstroms 14 in den Raum zwischen dem Wickelkörper 23 und dem äußeren Gehäuse 5 und danach das radiale Durchströmen des Wickelkörpers 23 von außen nach innen. Der Wickelkörper wird nach oben wiederum durch eine Deckfläche 10 begrenzt, wobei nur der Querschnitt des Innenrohres 3 freigehalten ist. Hierdurch strömt der erwärmte Sekundärstoffstrom 14 und gelangt in das obere Modul 1 und durch die in Deckennähe angeordneten Perforationen 6 des äußeren Gehäuses 5 in den Raum. Bevorzugt wird dieser kombinierte Wärmeübertrager als Raumheizer durch den Anschluß des unteren Wickelkörpers an ein System für die Bereitstellung eines Wärmeträgers als Primärstoffstrom 22 genutzt.

### Ausführungsbeispiel 5:

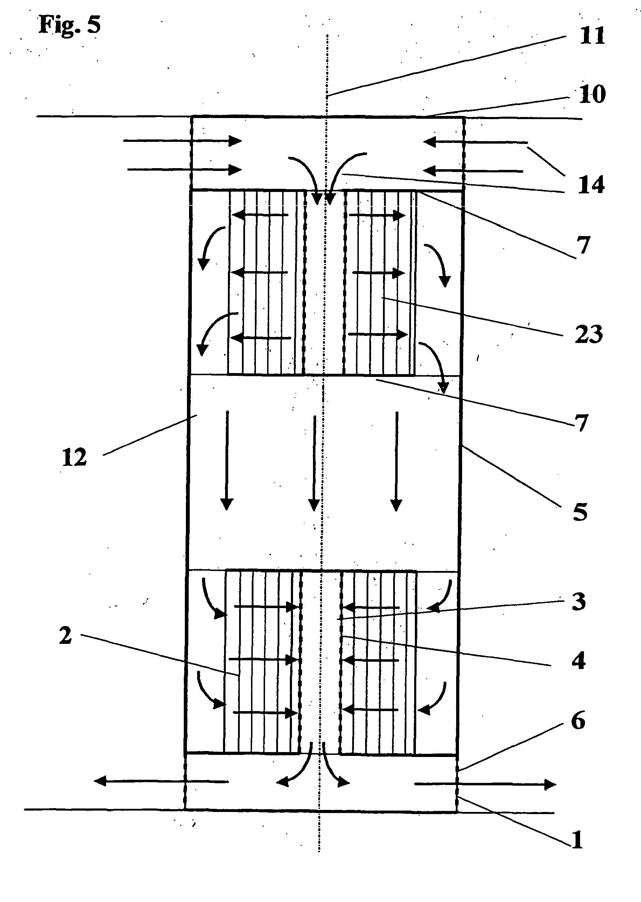

Gemäß der Figur 5 ist ein Wärmeübertrager analog der Fig. 4 gestaltet und wird im Ausführungsbeispiel zur Raumkühlung genutzt. In diesem Falle wird der kombinierte Wärmeübertrager vorzugsweise durch den Anschluß des oberen Wickelkörpers 23 an ein System für die Bereitstellung eines Kälteträgers als Primärstoffstrom 22 genutzt.

### Ausführungsbeispiel 6:

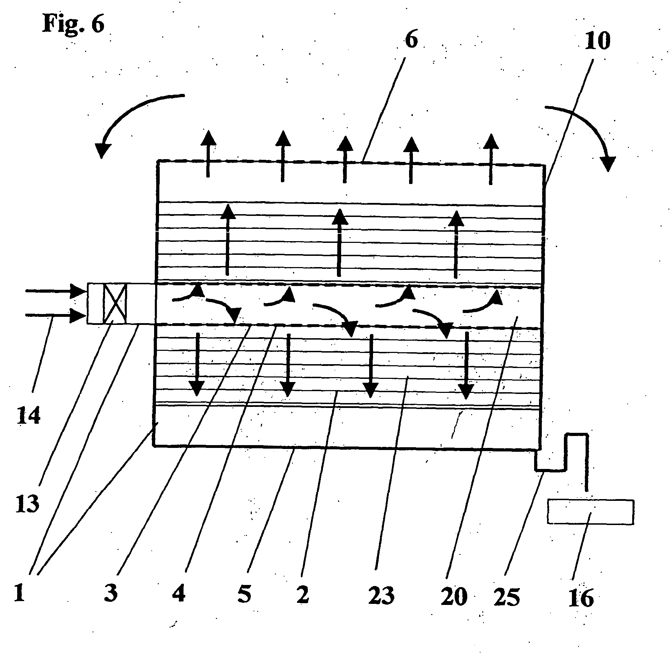

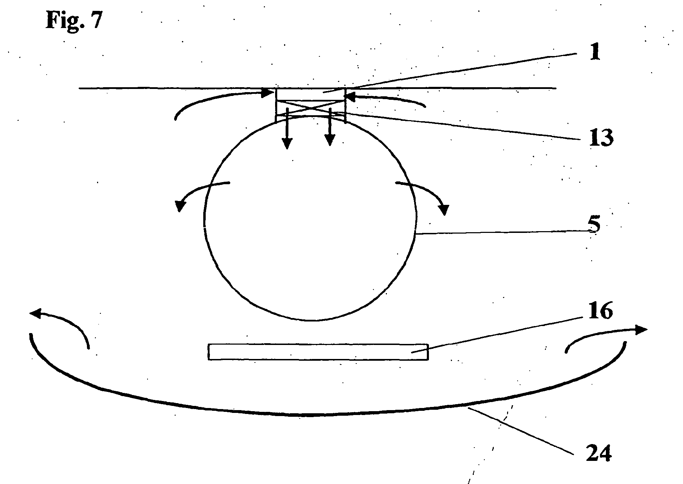

Gemäß der Figuren 6 und 7 wird für die Gewinnung eines Kühlluftstroms für das Beaufschlagen eines im Deckenbereichs eines Raumes angeordneten Kühlsegels 24 ein Wärmeübertrager in Form eines rohrförmigen Moduls 1 mit einer annähernd horizontalen Ausrichtung der Achse 11 des Wärmeübertragers eingesetzt.

Der Wärmeübertrager ist an beiden Enden durch Deckflächen 10 begrenzt. Auf der Seite der Zuführung der Raumluft als Sekundärstoffstrom 14 ist im Anschlußstutzen des Innenrohies 3 ein Gebläse 13 als Transportmittel des Sekundärstoffstroms 14 angeordnet. Das Innenrohr 3 weist durchgängig Perforationen 4 auf. Um das Innenrohr 3 befindet sich der Wickelkörper 23, der aus einer Kunststoff-Kapillarrohnnatte 2 gebildet wird. Der Wickelkörper 23 steht mit einem System für die Bereitstellung eines Kälteträgermittels als Primärstoffstrom 22 in Verbindung. Der in radialer Richtung den Wickelkörper durchströmende Sekundärstoffstrom 23 wird abgekühlt und gelangt in den Zwischenraum zwischen Wickelkörper 23 und äußeren Gehäuse 5. Das äußere Gehäuse 5 weist bis zu einer Höhe von etwa 20 % des Durchmessers keine Perforationen 6 auf. Im übrigen Bereich ist das äußere Gehäuse 5 mit Perforationen 6 ausgestattet, durch die der abgekühlte Sekundärstoffstrom 14 aus dem Wärmeübertrager austritt. Der untere nicht perforierte Bereich des äußeren Gehäuses 5 dient als Kondensatauffangvorrichtung 16, der über eine Syphon 25 mit einer Kondensatableitvorrichtung in Verbindung steht. Der aus dem Wärmeübertrager austretende Sekundärstoffstrom 14 gelangt auf das unter dem Wärmeübertrager in Deckennähe angeordnete Kühlsegel 24, das als Strahlungskältequelle genutzt wird.

### Ausführungsbeispiel 7:

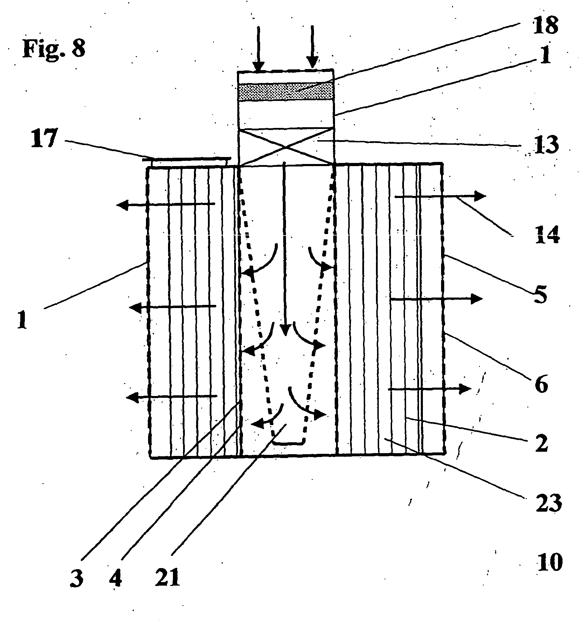

Gemäß der Figur 8 ist ein einmoduliger Wärmeübertrager mit einem Innenrohr 3 ausgestattet, das innerhalb des rohrförmigen Moduls 1 mit Perforationen 4 ausgeführt ist. Um dieses Innenrohr 3 ist eine Kunststoff-Kapillarrohrmatte 2 in Form eines Wickelkörpers 23 angeordnet. Das Modul 1 besitzt außerdem ein äußeres Gehäuse 5, das ebenfalls mit Perforationen 6 ausgeführt ist. Im Innenrohr 3 ist eine konisch ausgeführte Stoffstromleiteinrichtung 21 angeordnet, die einem gleichmäßigen Austritt des Sekundärstoffstroms 14 in das Innenrohr 3 dient. Der Stoffstromleiteinrichtung 21 ist ein Gebläse als Transportmittel 13 für den Sekundärstoffstrom 14 vorgeschaltet. Vor dem Gebläse 13 ist ein Luftfilter 18 angeordnet. Nach unten wird der Wärmeübertrager durch eine Deckfläche 10 über die gesamte vom äußeren Gehäuse 5 umgrenzte Fläche verschlossen. Nach oben ist der Wärmeüberbrager durch eine Abdeckung 7 begrenzt, auf der ein Verschluß 17 für die Sicherung der Zugänglichkeit zu Kontroll- und Wartungszwecken positioniert ist.

### Ausführungsbeispiel 8:

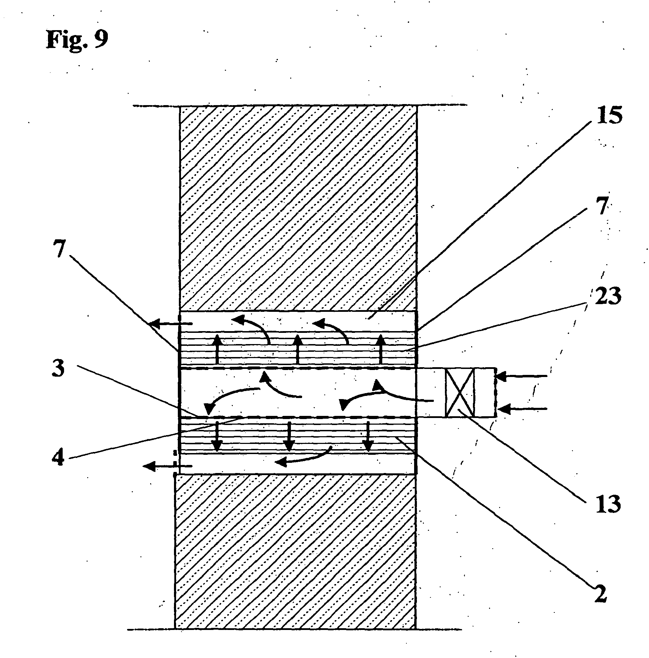

Gemäß der Figur 9 ist ein Wärmeübertrager zu Zwecken der Raumheizung oder -kühlung in einen Wanddurchlaß 15 angeordnet. Die Innenfläche des zylindrischen Wanddurchlasses bildet das äußere Gehäuse 5. Zum Nutzraum hin ist die Stirnseite des Wickelkörpers 23 und das Innenrohr 3 durch eine Abdeckung 7 verschlossen, wogegen die kreisringförmige Fläche zwischen dem Wickelkörper 23 und dem Wanddurchlaß 15 für das Ausströmen von erwärmter oder gekühlter Luft unverschlossen ist. Auf der raumabgewandten Seite des Wanddurchlasses 15 ist der Wärmeübertrager im Bereich außerhalb des Innenrohres 3 stirnseitig komplett verschlossen. Im verlängerten Innenrohr 3 befindet sich ein Gebläse 13 für den Transport des Sekundärstoffstroms 14 in den Wärmeübertrager. Das Innenrohr 3 ist über die gesamte Länge des Wärmetauschers mit Perforationen 4 ausgestattet. Der Sekundärstoffstrom 14 strömt nahezu radial durch den Wickelkörper 23 in den Zwischenraum zwischen Wickelkörper 23 und Wanddurchlaß 15. Je nach Erfordernis wird der Wickelkörper 23 mit einem System zur Bereitstellung eines Wärmeträgers oder eines Kälteträgers als Primärstoffstrom 22 verbunden.

### Ausführungsbeispiel 9:

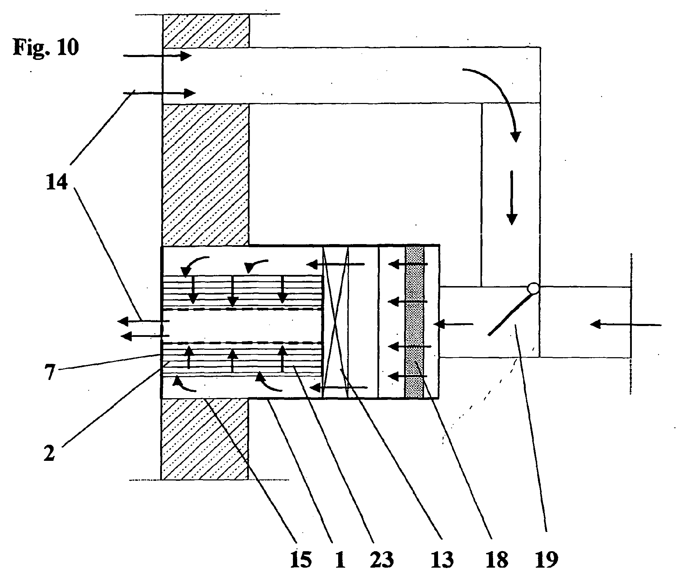

Gemäß der Figur 10 wird analog des Ausrührungsbeispiels 8 ein mehrmoduliger Wärmeübertrager teilweise in einem Wanddurchlaß 15 positioniert. Dem Wärmeübertrager vorgeschaltet ist ein rohrförmiges Modul 1 als Leermodul 12, in dem eine filternde und verteilende Installation 18 sowie ein Transportmittel 13 als Gebläse für den Sekundärstoffstrom 14 angeordnet ist. Diesem Modul vorgeschaltet ist eine Mischkammer 19, die mit einer Leitung zur Erfassung der verbrauchten Raumluft und einer Frischluftzuleitung in Verbindung steht. Auch in diesem Beispiel kann der Primärstoffstrom 22 ein Kälteträgermittel oder ein Wärmeträgermittel sein, wodurch der Wärmeübertrager für Heiz- oder Kühlzwecke genutzt werden kann.

### Bezugszeichenliste

- 1: rohrförmiges Modul
- 2: Kunststoff-Kapillarrohrmatte
- 3: inneres Rohr
- 4: Perforationen des inneren Rohres
- 5: äußeres Gehäuse
- 6: Perforationen des äußeren Gehäuses
- 7: Abdeckung
- 8: Perforationen der Abdeckung
- 9: Endmodul
- 10: Deckfläche
- 11: Achse des Wärmeübertragers
- 12: Leermodul
- 13: Transportmittel des Sekundärstoffstromes
- 14: Sekundärstoffstrom
- 15: Wanddurchlaß
- 16: Kondensatauffangvorrichtung
- 17: Verschluß
- 18: filternde und/oder verteilende Installationen
- 19: Mischkammer
- 20: Innenraum des Wärmeübertragers
- 21: Stoffstromleiteinrichtung
- 22: Primärstoffstrom
- 23: Wickelkörper
- 24: Kühlsegel
- 25: Syphon

## Patentansprüche

1. Wärmeübertrager mit spiralförmig angeordneten Kunststoff-Kapillarrohrmatten, bestehend aus das Wärmeträgermedium als Primärstoffistrom führenden Kunststoff-Kapillarrohrmatten,
**dadurch gekennzeichnet,**
**daß** die spiralförmig angeordnete Kunststoff-Kapillarrohrmatte (2) wenigstens einen formstabilen Wickelkörper bilden,
**daß** im Inneren des Wickelkörpers ein der Zu- oder Abführung eines Sekundärstoffstroms dienender Innenraum des Wärmeübertragers gebildet ist und
**daß** der Wickelkörper mit einer die Formstabilität und den radialen Durchtritt des Sekundärstoffstroms befördemden Hilfskonstruktion (7) ausgestattet ist.

2. Wärmeübertrager nach Anspruch 1 **dadurch gekennzeichnet, daß** der Wärmeübertragen zusätzlich ein inneres den Skundärstoffstrom zu- oder abführenden Rohr sowie ein äußeres den Sekundärstoffstrom zu- oder abführenden Gehäuse, innerhalb dessen die Kunststoff-Kapillarrohrmatte und das innere Rohr angeordnet sind, umfaßt, und
**daß** die Hilfskonstruktion (7) aus rohrförmige Module (1) besteht, welche mit spiralförmig angeordnete Kunststoff Kapillarrohrmatten (2) axial miteinander kombinierbar verbunden sind,
**daß** das innere Rohr (3) wenigstens im Bereich der spiralförmig angeordneten Kunststoff-Kapillarrohrmatte (2) Perforationen (4) aufweist,
**daß** das äußere Gehäuse (5) des Wärmeübertragers wenigstens teilweise Perforationen (6) aufweist und
**daß** zwischen den Modulen (1) wenigstens außerhalb des inneren Rohres (3) den radialen Durchtritt des Sekündärstoffstroms durch die spiralförmig angeordnete Kunststoff-Kapillarrohnnatte befördernde radial angeordnete Abdeckungen (7) angeordnet sind.

3. Wärmeubertrager mit spiralförmig angeordneten Kunststoff-Kapillarrohrmatten nach dem Anspruch 1, **dadurch gekennzeichnet, daß** die den zylindrischen Innenraum (20) des Wärmeübertragers stabilisierende Hilfskönstruktiön profilierte radial angeordnete Abdeckungen (7) des Wickelkörpers, ein Zylinder aus Maschendraht oder eine das Mattenbündel fixierende Matrix aus Kunststoffbindern ist.

4. Wäpneübertrager mit spiralförmig angeordneten Kunststoff-Kapillarrohrmatten nach dem Ansprüche 2 bis 3, **dadurch gekennzeichnet, daß** die Perforationen (6) im äußeren Gehäuse (5) des Wärmeübertragers in den Modulen (1) ohne spiralförmig angeordneter Kunststoff-Kapillarrohrmatte (2) angeordnet sind.

5. Wärmeübertrager mit spiralförmig angeordneten Kunststoff-Kapillarrohrmatten nach den Ansprüchen 2 bis 3, **dadurch gekennzeichnet, daß** die Perforationen (6) im äußeren Gehäuse (5) des Wärmeübertragers in den Modulen (1) mit spiralförmig angeordneter Kunststoff Kapillarrohrmatte (2) angeordnet sind.

6. Wänneübertrager mit spiralförmig angeordneten Kunststoff-Kapillarrohrmatten nach einem der Ansprüche 2 bis 5, **dadurch gekennzeichnet, daß** das äußere Gehäuse (5) des Wärmetauschers als prismatischer Kanal oder als Rohr ausgebildet ist.

7. Wärmeübertrager mit spiralförmig angeordneten Kunststoff-Kapillarrohrmatten nach einem der Ansprüche 1 bis 6, **dadurch gekennzeichnet, daß** die einer annähernd gleichmäßigen Verteilung oder Erfassung des Sekundärstoffstroms als Stoffstromleiteinrichtung (21) dienende Komponente im Innenraum (20) des Wärmeübertragers mit stetig oder unstetig sich verändernden Querschnittsflächen, vorzugsweise in konischer Form, ausgebildet ist.

8. Wärmeübertrager mit spiralförmig angeordneten Kunststoff-Kapillarrohrmatten nach dem Anspruch 7, **dadurch gekennzeichnet, daß** die konisch ausgebildete. Stoffstromleiteinrichtung (21) im Innenraum (20) des Wärmeübertragers aus textilen Gewebe oder perforiertem Material aus Metall oder Kunststoff besteht.

9. Wärmeübertrager mit spiralförmig angeordneten Kunststoff-Kapillarrohrmatten nach einem der Ansprüche 1 bis 8, **dadurch gekennzeichnet, daß** die Abdeckungen (7) eine wenigstens anteilige Axialströmung durch das Paket der spiralförmig angeordneten Kunststoff-Kapillarrohrmatte (2) bewirkende Perforationen (8) aufweisen.

10. Wärmeübertrager mit spiralförmig angeordneten Kunststoff-Kapillarrohrmatten nach einem der Ansprüche bis 9, **dadurch gekennzeichnet, daß** am Endmodul (9) eine unperforierte Deckfläche (10) über die gesamte vom äußeren Gehäuse (5) des Wärmeübertragers umgrenzten Querschnittsfläche angeordnet ist.

11. Wärmeübertrager mit spiralförmig angeordneten Kunststoff-Kapillarrohrmatten nach einem der Ansprüche 1 bis 10, **dadurch gekennzeichnet, daß** die Achse (11) des Wärmeübertragers annähernd horizontal angeordnet ist.

12. Wärmeübertrager mit spiralförmig angeordneten Kunststoff-Kapillarrohrmatten nach einem der Ansprüche 1 bis 10, **dadurch gekennzeichnet, daß** die Achse (11) des Wärmeübertragers annähernd vertikal angeordnet ist.

13. Wärmeüberträger mit spiralförmig angeordneten Kunststoff-Kapillarrohrmatten nach einem der Anspruche 1 bis 12, **dadurch gekennzeichnet, daß** zwischen den Modulen (1) mit spiralförmig angeordneten Kunststof-Kapillarrohmatten (2) Leermodule (12) angeordnet sind.

14. Wärmeübertrager mit, spiralförmig angeordneten Kunststoff Kapillarrohrmatten nach einem der Ansprüche 1 bis 13, **dadurch gekennzeichnet, daß** in den Leermodulen (12), in den Modulen (1) ohne spiralförmig angeordneten Kunststoff-Kapillarrohrmatten. (2) innerhalb des inneren Rohres (3), innerhalb der vorzugsweise konisch ausgebildeten Stoffstromleiteinrichtung (21), innerhalb des äußeren Gehäuses (5) oder innerhalb der kreisringförmigen Fläche zwischen dem inneren Rohr (3) und dem äußeren Gehäuse (5) Mittel (13); beispielsweise Gebläse, für den Transport des Sekundärstoffstroms (14) angeordnet sind.

15. Wärmeübertrager mit spiralförmig angeordneten Kunststoff-Kapiffarrohrmatten nach einem der Ansprüche 1 bis 14, **dadurch gekennzeichnet, daß** zwischen Modulen (1) mit spiralförmig angeordneten Kunststoff-Kapillarrohrmatten (2) und Leermodulen (12) Abdeckungen (7) zwischen dem inneren Rohr (3) und der äußeren Gehäusewand (5) angeordnet sind.

16. Wärmeübertrager mit spiralförmig angeordneten Kunststoff-Kapillarrohrmatten nach einem der Ansprüche 1 bis 15, **dadurch gekennzeichnet, daß** das äußere Gehäuse (5) des Wärmeübertragers als raumbegrenzende Komponente und/oder in einem Durchlaß (15) durch vertikale oder horizontale Raumbegrenzungswände angeordnet ist.

17. Wärmeübertrager mit spiralförmig angeordneten Kunststoff-Kapillarrohrmatten nach dem Anspruch 16, **dadurch gekennzeichnet, daß** im Falle der Anordnung des Wärmeübertragers in einem Durchlaß (15) durch vertikale oder horizontale Raumbegrenzungswände die Durchlaßinnenflächen als äußere Kanalbegrenzung (5) ausgeführt sind.

18. Wärmeübertrager mit spiralförmig angeordneten Kunststoff Kapillarrohrmatten nach einem der Ansprüche 1 bis 17, **dadurch gekennzeichnet, daß** innerhalb des Innenrohres (3) oder zwischen dem Innenrohr (3) und dem äußeren Gehäuse (5) Mittel (16) für das Erfassen und Abführen anfallender Kondensate angeordnet sind.

19. Wärmeübertrager mit spiralförmig angeordneten Kunststoff-Kapillarrohrmatten nach einem der Ansprüche 1 bis, 18, **dadurch gekennzeichnet, daß** an der äußeren Gehäusewand (5), oder den Deckflächen (10) der Reinigung des Wärmeübertragers dienende demonüerbare Verschlüsse (17) angeordnet sind.

20. Wärmeübertrager mit spiralförmig angeordneten Kunststoff-Kapillarrohrmatten nach einem der Ansprüche 1 bis 19, **dadurch gekennzeichnet, daß** im Innenrohr (3) an dessen Wand und/oder an der äußeren Gehäusewand (5) der gleichmäßigen Verteilung und/oder der Filterung des Sekundärstoffstromes (14) dienende Installationen (18) angeordnet sind.

21. Wärmeübertrager mit spiralförmig angeordneten Kunststoff Kapmarrohrmatten nach einem der Ansprüche 1 bis 20, **dadurch gekennzeichnet, daß** am oder im Innenrohr (3) eine Mischkammer (19) zum Mischen unterschiedlicher Sekundärstoffströme (14) angeordnet ist.

22. Verfahren zur Anwendung eines Spiralwärmeübertragers, aus Kunststoff Kapillarrohrmatten nach den Ansprüchen 1 bis 21, bei dem durch eine spiralförmig gewickelte Kunststoff-Kapillarrohrmatte, die von einem dem Wärmetransport dienendem Primärstoffstrom durchströmt wird, ein zu erwärmender oder zu kühlender Sekundärstoffstrom geführt wird, **dadurch gekennzeichnet,**
**daß** der Sekundärstoffstrom (14) annähernd senkrecht zur Achse (11) der spiralförmig gewickelten Kunststoff-Kapillarrohrmatte (2) durch die spiralförmig gewickelte Kunststoff- Kapillarrohrmatte (2) hindurchgeführt wird.

23. Verfahren nach dem Anspruch 22, **dadurch gekennzeichnet,**
**daß** im Falle der annähernd senkrechten Anordnung der Achse (11) des Spiralwärmeübertragers der Transport des Sekundärstoffstroms (14) durch den Spiralwärmeübertrager infolge des sich ergebenden thermodynamischen Dichteunterschiedes bewirkt wird.

24. Verfahren nach einem der Ansprüche 22 und 23, **dadurch gekennzeichnet, daß** der Spiralwärmeübertrager als Trockenkühler durch den Einsatz von kalter atmosphärischer Luft als Sekundärstofftrom (14) zur Kühlung des flüssigen Primärstoffstroms (22) genutzt wird.

25. Verfahren nach einem der Ansprüche 22 und 23, **dadurch gekennzeichnet, daß** der Spiralwärmeübertrager als Naßkühler zum Zwecke der Leistungssteigerung unter Nützung der Verdunstungskälte der Wickelkörper (23) aus der Kunststoff-Kapillarrohrmatte (2) mit einer verdunstenden Flüssigkeit, vorzugsweise mit Wasser, berieselt oder besprüht wird.

26. Verfahren nach einem der Ansprüche 24 und 25, **dadurch gekennzeichnet, daß** der Spirawärmeäbertrager durch eine wahlweise temperatur- und/oder leistungsgesteuerte Umschaltung zwischen den Betriebsarten Trockenkühlung und Naßkühlung genutzt wird.

27. Verfahren nach einem der Ansprüche 22 bis 26, **dadurch gekennzeichnet, daß** wenigstens zwei Spiralwärmeübertrager für die Ausbildung einer mehrstung arbeitenden Spiralwärmeübertragerkombination so hintereinander geschaltet werden, daß eine dazwischen angeordnete Transporteinrichtung (13) im ersten Spiralwärmeübertrager den Sekundärstoffstrom (14) von außen nach innen und im zweiten Spiralwärmeubertrager von innen nach außen führt,

28. Verfahren nach dem Anspruch 27, **dadurch gekennzeichnet, daß** die Spiralwärmeübertrager einer Spiralwärmeübertragerkombination in verschiedenen Räumen angeordnet werden.

29. Verfahren nach einem der Ansprüche 22 bis 28, **dadurch gekennzeichnet, daß** zum Zwecke der Kühlung eines, sogenannten Kühlsegels (24) der Spiralwärmeübertrager über diesem Kühlsegel (24) in horizontaler oder nahezu horizontaler Lage der Achse (11) angeordnet wird und die vom Spiralwärmeübertrager gekühlte Luft dem darunter angeordneten ebenen, schalen- oder trogförmigen Kühlsegel (24) beaufschlagt wird.

30. Verfahren nach dem Anspruch 29, **dadurch gekennzeichnet, daß** das aus einer perforierten Konstruktion gebildete Kühlsegel (24) von der darüber gewonnenen kalten Luft durchströmt wird.

31. Verfahren nach einem der Ansprüche 22 bis 3 0, **dadurch gekennzeichnet, daß** als den Spiralwärmeübertrager durchströmender Sekündärstoffstrom (14) eine Flüssigkeit, vorzugsweise aufzuheizendes oder zu kühlendes Wasser, verwendet wird.

32. Verfahren nach dem Anspruch 31, **dadurch gekennzeichnet, daß** als das aufzuheizende oder zu kühlende Medium wenigstens Teile einer Umweltwärmequelle oder Umweltkältequelle verwendet werden.

33. Verfahren nach einem der Ansprüche 22 bis 32, **dadurch gekennzeichnet, daß** der Spiralwärmeübertrager oder die Spiralwärmeüberträgerkombination in räumlich beliebiger Lage der Achse (11); vorzugsweise jedoch in vertikaler oder in horizontaler Achslage, eingesetzt wird.

## Claims

1. Heat exchanger with spirally arranged plastic capillary tube mats, comprising plastic capillary tube mats carrying the heat transfer medium as a primary material flow, **characterized in that** the spirally arranged plastic capillary tube mats (2) form at least one dimensionally stable wound body, **in that** an inner space of the heat exchanger, serving for supplying or discharging a secondary material flow is formed inside the wound body and **in that** the wound body is provided with an auxiliary construction (7), which is conducive to the dimensional stability and the radial passage of the secondary material flow.

2. Heat exchanger according to Claim 1, **characterized in that** the heat exchanger additionally comprises an inner tube, supplying or discharging the secondary material flow, and an outer housing, supplying or discharging the secondary material flow, within which the plastic capillary tube mat and the inner tube are arranged, and **in that** the auxiliary construction (7) comprises tubular modules (1), which are connected in such a way that they can be combined axially with one another by spirally arranged plastic capillary tube mats (2), **in that** the inner tube (3) has perforations (4), at least in the region of the spirally arranged plastic capillary tube mat (2), **in that** the outer housing (5) of the heat exchanger at least partially has perforations (6) and **in that** radially arranged coverings (7), which are conducive to the radial passage of the secondary material flow through the spirally arranged plastic capillary tube mat, are arranged between the modules (1), at least outside the inner tube (3).

3. Heat exchanger with spirally arranged plastic capillary tube mats according to Claim 1, **characterized in that** the auxiliary construction stabilizing the cylindrical inner space (20) of the heat exchanger comprises profiled radially arranged covers (7) of the wound body, a wire-mesh cylinder or a matrix of polymer binders fixing the bundle of mats.

4. Heat exchanger with spirally arranged plastic capillary tube mats according to Claims 2 and 3, **characterized in that** the perforations (6) in the outer housing (5) of the heat exchanger are arranged in the modules (1) without a spirally arranged plastic capillary tube mat (2).

5. Heat exchanger with spirally arranged plastic capillary tube mats according to Claims 2 and 3, **characterized in that** the perforations (6) in the outer housing (5) of the heat exchanger are arranged in the modules (1) with a spirally arranged plastic capillary tube mat (2).

6. Heat exchanger with spirally arranged plastic capillary tube mats according to one of Claims 2 to 5, **characterized in that** the outer housing (5) of the heat exchanger is formed as a prismatic channel or as a tube.

7. Heat exchanger with spirally arranged plastic capillary tube mats according to one of Claims 1 to 6, **characterized in that** the component serving for an approximately uniform distribution or reception of the secondary material flow as a material-flow directing device (21) in the inner space (20) of the heat exchanger is formed with continuously or discontinuously changing cross-sectional areas, preferably in a conical form.

8. Heat exchanger with spirally arranged plastic capillary tube mats according to Claim 7, **characterized in that** the conically formed material-flow directing device (21) in the inner space (20) of the heat exchanger consists of textile fabric or perforated material of metal or plastic.

9. Heat exchanger with spirally arranged plastic capillary tube mats according to one of Claims 1 to 8, **characterized in that** the covers (7) have perforations (8) effecting an at least proportionate axial flow through the assembly of the spirally arranged plastic capillary tube mat (2).

10. Heat exchanger with spirally arranged plastic capillary tube mats according to one of Claims 1 to 9, **characterized in that** an unperforated covering surface (10) is arranged on the end module (9), over the entire cross-sectional area enclosed by the outer housing (5) of the heat exchanger.

11. Heat exchanger with spirally arranged plastic capillary tube mats according to one of Claims 1 to 10, **characterized in that** the axis (11) of the heat exchanger is arranged approximately horizontally.

12. Heat exchanger with spirally arranged plastic capillary tube mats according to one of Claims 1 to 10, **characterized in that** the axis (11) of the heat exchanger is arranged approximately vertically.

13. Heat exchanger with spirally arranged plastic capillary tube mats according to one of Claims 1 to 12, **characterized in that** empty modules (12) are arranged between the modules (1) with spirally arranged plastic capillary tube mats (2).

14. Heat exchanger with spirally arranged plastic capillary tube mats according to one of Claims 1 to 13, **characterized in that** means (13), for example blowers, for transporting the secondary material flow (14) are arranged in the empty modules (12), in the modules (1) without spirally arranged plastic capillary tube mats (2) within the inner tube (3), within the preferably conically formed material-flow directing device (21), within the outer housing (5) or within the annular area between the inner tube (3) and the outer housing (5) .

15. Heat exchanger with spirally arranged plastic capillary tube mats according to one of Claims 1 to 14, **characterized in that**, between modules (1) with spirally arranged plastic capillary tube mats (2) and empty modules (12), covers (7) are arranged between the inner tube (3) and the outer housing wall (5).

16. Heat exchanger with spirally arranged plastic capillary tube mats according to one of Claims 1 to 15, **characterized in that** the outer housing (5) of the heat exchanger is arranged as a space-delimiting component and/or in a passage (15) through vertical or horizontal space-delimiting walls.

17. Heat exchanger with spirally arranged plastic capillary tube mats according to Claim 16, **characterized in that**, in the case of the arrangement of the heat exchanger in a passage (15) through vertical or horizontal space-delimiting walls, the inner surfaces of the passage are configured as an outer channel delimitation (5).

18. Heat exchanger with spirally arranged plastic capillary tube mats according to one of Claims 1 to 17, **characterized in that** means (16) for receiving and discharging condensates occurring are arranged within the inner tube (3) or between the inner tube (3) and the outer housing (5).

19. Heat exchanger with spirally arranged plastic capillary tube mats according to one of Claims 1 to 18, **characterized in that** detachable closures (17), serving for the cleaning of the heat exchanger, are arranged on the outer housing wall (5) or the covering surfaces (10).

20. Heat exchanger with spirally arranged plastic capillary tube mats according to one of Claims 1 to 19, **characterized in that** installations (18) serving for the uniform distribution and/or filtering of the secondary material flow (14) are arranged in the inner tube (3) on its wall and/or on the outer housing wall (5).

21. Heat exchanger with spirally arranged plastic capillary tube mats according to one of Claims 1 to 20, **characterized in that** a mixing chamber (19) for mixing different secondary material flows (14) is arranged on or in the inner tube (3).

22. Method for using a spiral heat exchanger comprising plastic capillary tube mats according to Claims 1 to 21, in which a secondary material flow to be heated or cooled is passed through a spirally wound plastic capillary tube mat, through which there flows a primary material flow serving for the heat transfer, **characterized in that** the secondary material flow (14) is passed through the spirally wound plastic capillary tube mat (2) approximately perpendicularly in relation to the axis (11) of the spirally wound plastic capillary tube mat (2).

23. Method according to Claim 22, **characterized in that**, in the case of the approximately vertical arrangement of the axis (11) of the spiral heat exchanger, the transport of the secondary material flow (14) through the spiral heat exchanger is effected as a result of the difference in thermodynamic density that is obtained.

24. Method according to either of Claims 22 and 23, **characterized in that** the spiral heat exchanger is used as a dry cooler by using cold atmospheric air as the secondary material flow (14) for cooling the liquid primary material flow (22).

25. Method according to either of Claims 22 and 23, **characterized in that** the spiral heat exchanger, as a wet cooler, is sprinkled or sprayed with an evaporating liquid, preferably with water, for the purpose of increasing the output by utilizing the cold due to evaporation of the wound bodies (23) from the plastic capillary tube mat (2).

26. Method according to either of claims 24 and 25, **characterized in that** the spiral heat exchanger is used by an optionally temperature- and/or output-controlled switch-over between the operating modes of dry cooling and wet cooling.

27. Method according to one of Claims 22 to 26, **characterized in that**, for the formation of a spiral heat exchanger combination operating with multiple stages, at least two spiral heat exchangers are connected one behind the other in such a way that a transporting device (13) arranged in between passes the secondary material flow (14) from outside to inside in the first spiral heat exchanger and from inside to outside in the second spiral heat exchanger.

28. Method according to Claim 27, **characterized in that** the spiral heat exchangers of a spiral heat exchanger combination are arranged in different rooms.

29. Method according to one of Claims 22 to 28, **characterized in that**, for the purpose of cooling a suspended cooling panel (24), the spiral heat exchanger is arranged over this cooling panel (24) with the axis (11) in a horizontal or virtually horizontal position, and the air cooled by the spiral heat exchanger is applied to the planar, tray- or pan-shaped cooling panel (24) arranged underneath.

30. Method according to Claim 29, **characterized in that** the suspended cooling panel (24) formed by a perforated construction is flowed through by the cold air obtained above it.

31. Method according to one of Claims 22 to 30, **characterized in that** a liquid, preferably water to be heated up or to be cooled, is used as the secondary material flow (14) flowing through the spiral heat exchanger.

32. Method according to Claim 31, **characterized in that** at least parts of an environmental heat source or environmental cold source are used as the medium to be heated up or to be cooled.

33. Method according to one of Claims 22 to 32, **characterized in that** the spiral heat exchanger or the spiral heat exchanger combination is used with the axis (11) in any spatial position, but preferably with the axis in a vertical or horizontal position.

## Revendications

1. Echangeur de chaleur comprenant des tapis de tubes capillaires en plastique disposés en spirale, constitué de tapis de tubes capillaires en plastique conduisant le fluide caloporteur sous forme de courant de matière primaire,
**caractérisé en ce que**
les tapis de tubes capillaires en plastique (2) disposés en spirale forment au moins un corps enroulé de forme stable,
**en ce qu'**à l'intérieur du corps enroulé est formé un espace interne de l'échangeur de chaleur servant à l'apport ou à l'évacuation d'un courant de matière secondaire, et
**en ce que** le corps enroulé est pourvu d'une construction auxiliaire (7) améliorant la stabilité de forme et le passage radial du courant de matière secondaire.

2. Echangeur de chaleur selon la revendication 1,
**caractérisé en ce que**
l'échangeur de chaleur comprend en outre un tube interne apportant ou évacuant le courant de matière secondaire ainsi qu'un boîtier extérieur apportant ou évacuant le courant de matière secondaire, à l'intérieur duquel les tapis de tubes capillaires en plastique et le tube interne son disposés, et
**en ce que** la construction auxiliaire (7) se compose de modules tubulaires (1), qui sont connectés de manière à pouvoir être combinés axialement les uns aux autres à des tapis de tubes capillaires en plastique (2) disposés en spirale,
**en ce que** le tube interne (3) présente au moins dans la région des tapis de tubes capillaires en plastique (2) disposés en spirale, des perforations (4),
**en ce que** le boîtier extérieur (5) de l'échangeur de chaleur présente au moins en partie des perforations (6) et
**en ce qu'**entre les modules (1), au moins en dehors du tube interne (3), sont disposés des recouvrements (7) disposés radialement, favorisant le passage radial du courant de matière secondaire à travers les tapis de tubes capillaires en plastique disposés en spirale.

3. Echangeur de chaleur comprenant des tapis de tubes capillaires en plastique disposés en spirale selon la revendication 1, **caractérisé en ce que** la construction auxiliaire stabilisant l'espace interne cylindrique (20) de l'échangeur de chaleur est constituée par des recouvrements (7) profilés et disposés radialement du corps enroulé, un cylindre en mailles métalliques ou une matrice de liants en plastique fixant le faisceau de tapis.

4. Echangeur de chaleur comprenant des tapis de tubes capillaires en plastique disposés en spirale selon les revendications 2 à 3, **caractérisé en ce que** les perforations (6) sont disposées dans le boîtier extérieur (5) de l'échangeur de chaleur dans les modules (1) sans tapis de tubes capillaires en plastique (2) disposés en spirale.

5. Echangeur de chaleur comprenant des tapis de tubes capillaires en plastique disposés en spirale selon les revendications 2 à 3, **caractérisé en ce que** les perforations (6) sont disposées dans le boîtier extérieur (5) de l'échangeur de chaleur dans les modules (1) avec tapis de tubes capillaires en plastique (2) disposés en spirale.

6. Echangeur de chaleur comprenant des tapis de tubes capillaires en plastique disposés en spirale selon l'une quelconque des revendications 2 à 5, **caractérisé en ce que** le boîtier extérieur (5) de l'échangeur de chaleur est réalisé sous forme de canal prismatique ou sous forme de tube.

7. Echangeur de chaleur comprenant des tapis de tubes capillaires en plastique disposés en spirale selon l'une quelconque des revendications 1 à 6, **caractérisé en ce que** le composant dans l'espace interne (20) de l'échangeur de chaleur, servant à effectuer une répartition approximativement uniforme ou un captage du courant de matière secondaire en tant que dispositif de guidage du courant de matière (21) est réalisé avec des surfaces en section transversale variant en continu ou de manière discontinue, de préférence sous forme conique.

8. Echangeur de chaleur comprenant des tapis de tubes capillaires en plastique disposés en spirale selon la revendication 7, **caractérisé en ce que** le dispositif de guidage du courant de matière réalisé sous forme conique (21) dans l'espace interne (20) de l'échangeur de chaleur se compose de tissus textiles ou de matériau perforé en métal ou en plastique.

9. Echangeur de chaleur comprenant des tapis de tubes capillaires en plastique disposés en spirale selon l'une quelconque des revendications 1 à 8, **caractérisé en ce que** les recouvrements (7) présentent des perforations (8) provoquant un écoulement axial au moins proportionnel à travers le paquet des tapis de tubes capillaires en plastique (2) disposés en spirale.

10. Echangeur de chaleur comprenant des tapis de tubes capillaires en plastique disposés en spirale selon l'une quelconque des revendications 1 à 9, **caractérisé en ce que** sur le module d'extrémité (9) est disposée une surface de recouvrement (10) non perforée sur toute la surface en section transversale limitée par le boîtier extérieur (5) de l'échangeur de chaleur.

11. Echangeur de chaleur comprenant des tapis de tubes capillaires en plastique disposés en spirale selon l'une quelconque des revendications 1 à 10, **caractérisé en ce que** l'axe (11) de l'échangeur de chaleur est disposé approximativement horizontalement.

12. Echangeur de chaleur comprenant des tapis de tubes capillaires en plastique disposés en spirale selon l'une quelconque des revendications 1 à 10, **caractérisé en ce que** l'axe (11) de l'échangeur de chaleur est disposé approximativement verticalement.

13. Echangeur de chaleur comprenant des tapis de tubes capillaires en plastique disposés en spirale selon l'une quelconque des revendications 1 à 12, **caractérisé en ce que** des modules vides (12) sont disposés entre les modules (1) avec des tapis de tubes capillaires en plastique (2) disposés en spirale.

14. Echangeur de chaleur comprenant des tapis de tubes capillaires en plastique disposés en spirale selon l'une quelconque des revendications 1 à 13, **caractérisé en ce que** dans les modules vides (12), dans les modules (1) sans tapis de tubes capillaires en plastique (2) disposés en spirale à l'intérieur du tube interne (3), à l'intérieur du dispositif de guidage de courant de matière (21) réalisé de préférence sous forme conique, à l'intérieur du boîtier extérieur (5) ou à l'intérieur de la surface de forme annulaire circulaire entre le tube interne (3) et le boîtier extérieur (5) sont disposés des moyens (13), par exemple des soufflantes, pour le transport du courant de matière secondaire (14).

15. Echangeur de chaleur comprenant des tapis de tubes capillaires en plastique disposés en spirale selon l'une quelconque des revendications 1 à 14, **caractérisé en ce qu'**entre les modules (1) avec des tapis de tubes capillaires en plastique (2) disposés en spirale et les modules vides (12) sont disposés des recouvrements (7) entre le tube interne (3) et la paroi extérieure du boîtier (5).

16. Echangeur de chaleur comprenant des tapis de tubes capillaires en plastique disposés en spirale selon l'une quelconque des revendications 1 à 15, **caractérisé en ce que** le boîtier extérieur (5) de l'échangeur de chaleur est disposé sous forme de composant limitant l'espace et/ou est disposé dans un passage (15) à travers des parois verticales ou horizontales de limitation de l'espace.

17. Echangeur de chaleur comprenant des tapis de tubes capillaires en plastique disposés en spirale selon la revendication 16, **caractérisé en ce que** dans le cas de l'agencement de l'échangeur de chaleur dans un passage (15) à travers des parois verticales ou horizontales de limitation de l'espace, les faces internes du passage sont réalisées sous forme de limitation de canal extérieure (5).

18. Echangeur de chaleur comprenant des tapis de tubes capillaires en plastique disposés en spirale selon l'une quelconque des revendications 1 à 17, **caractérisé en ce que** des moyens (16) pour capter et évacuer le condensat formé sont disposés à l'intérieur du tube interne (3) ou entre le tube interne (3) et le boîtier extérieur (5).

19. Echangeur de chaleur comprenant des tapis de tubes capillaires en plastique disposés en spirale selon l'une quelconque des revendications 1 à 18, **caractérisé en ce que** des fermetures (17) démontables servant à nettoyer l'échangeur de chaleur sont disposées sur la paroi extérieure du boîtier (5) ou sur les faces de recouvrement (10).

20. Echangeur de chaleur comprenant des tapis de tubes capillaires en plastique disposés en spirale selon l'une quelconque des revendications 1 à 19, **caractérisé en ce que** des installations (18) servant à la répartition uniforme et/ou au filtrage du courant de matière secondaire (14) sont disposées dans le tube interne (3) sur sa paroi et/ou sur la paroi extérieure du boîtier (5) .

21. Echangeur de chaleur comprenant des tapis de tubes capillaires en plastique disposés en spirale selon l'une quelconque des revendications 1 à 20, **caractérisé en ce qu'**une chambre de mélange (19) pour le mélange de différents courants de matière secondaire (14) est disposée sur ou dans le tube interne (3).

22. Procédé d'utilisation d'un échangeur de chaleur spiral constitué de tapis de tubes capillaires en plastique selon les revendications 1 à 21, dans lequel un courant de matière secondaire à réchauffer ou à refroidir est guidé à travers un tapis de tubes capillaires en plastique enroulé en spirale, qui est parcouru par un courant de matière primaire servant au transport thermique,
**caractérisé en ce que**
le courant de matière secondaire (14) est guidé approximativement perpendiculairement à l'axe (11) du tapis de tubes capillaires en plastique (2) enroulé en spirale à travers le tapis de tubes capillaires en plastique (2) enroulé en spirale.

23. Procédé selon la revendication 22, **caractérisé en ce que** dans le cas d'un agencement approximativement perpendiculaire de l'axe (11) de l'échangeur de chaleur spiral, le transport du courant de matière secondaire (14) s'effectue à travers l'échangeur de chaleur spiral du fait de la différence de densité thermodynamique en résultant.

24. Procédé selon l'une quelconque des revendications 22 et 23, **caractérisé en ce que** l'échangeur de chaleur spiral est utilisé comme refroidisseur à sec par utilisation d'air atmosphérique froid comme courant de matière secondaire (14) pour refroidir le courant de matière primaire fluide (22).

25. Procédé selon l'une quelconque des revendications 22 et 23, **caractérisé en ce que** l'échangeur de chaleur spiral est irrigué ou pulvérisé avec un liquide s'évaporant, de préférence de l'eau, en tant que refroidisseur humide afin d'augmenter la puissance par l'utilisation du froid d'évaporation du corps enroulé (23) du tapis de tubes capillaires en plastique (2).

26. Procédé selon l'une quelconque des revendications 24 et 25, **caractérisé en ce que** l'échangeur de chaleur spiral est utilisé en commutation au choix de manière commandée en température et/ou en puissance, entre les types de fonctionnement de refroidissement à sec et de refroidissement humide.

27. Procédé selon l'une quelconque des revendications 22 à 26, **caractérisé en ce que** deux échangeurs de chaleur en spiral au moins sont montés l'un derrière l'autre pour la réalisation d'une combinaison d'échangeurs de chaleur en spirale fonctionnant à plusieurs étages, de sorte qu'un dispositif de transport (13) disposé entre eux conduise le courant de matière secondaire (14) dans le premier échangeur de chaleur spiral de l'extérieur vers l'intérieur et dans le deuxième échangeur de chaleur de l'intérieur vers l'extérieur.

28. Procédé selon la revendication 27, **caractérisé en ce que** les échangeurs de chaleur en spirale d'une combinaison d'échangeurs de chaleur en spirale sont disposés dans différents espaces.

29. Procédé selon l'une quelconque des revendications 22 à 28, **caractérisé en ce que** pour refroidir ce qu'on appelle un voile de refroidissement (24), l'échangeur de chaleur spiral est disposé sur ce voile de refroidissement (24) en position horizontale ou pratiquement horizontale de l'axe (11), et l'air refroidi par l'échangeur de chaleur spiral est sollicité par le voile de refroidissement (24) plan, en forme de coque ou en forme d'auge, disposé en dessous.

30. Procédé selon la revendication 29, **caractérisé en ce que** le voile de refroidissement (24) formé par une construction perforée est parcouru par l'air froid obtenu par-dessus.

31. Procédé selon l'une quelconque des revendications 22 à 30, **caractérisé en ce que** l'on utilise comme courant de matière secondaire (14) traversant l'échangeur de chaleur spiral un liquide, de préférence de l'eau à réchauffer ou à refroidir.

32. Procédé selon la revendication 31, **caractérisé en ce que** l'on utilise comme fluide à réchauffer ou à refroidir au moins des portions d'une source de chaleur provenant de l'environnement ou d'une source de froid provenant de l'environnement.

33. Procédé selon l'une quelconque des revendications 22 à 32, **caractérisé en ce que** l'échangeur de chaleur spiral ou la combinaison d'échangeurs de chaleur en spirale est utilisé(e) dans une position spatiale quelconque de l'axe (11), de préférence toutefois dans une position verticale ou horizontale de l'axe.
